# EUROPEAN PATENT APPLICATION

(11) **EP 4 388 889 A1**
(43) Date of publication of application: **26.06.2024**
(21) Application number: 22871393.9
(22) Date of filing: 28.04.2022
(51) Int. Cl.: A23L 3/3571, A23L 7/104, A23L 3/3454

(54) **NATURAL BIOPRESERVATIVE FOR FLOUR PRODUCT, PREPARATION METHOD THEREFOR AND APPLICATION THEREOF**

(30) Priority: 23.09.2021 CN 202111114712
(71) Applicant: Angel Yeast Co., Ltd, Yichang, Hubei 443003 (CN)
(72) Inventor: XIONG, Tao, Yichang, Hubei 443003 (CN); CHENG, Ben, Yichang, Hubei 443003 (CN); HU, Xinping, Yichang, Hubei 443003 (CN)
(74) Representative: karo IP
(86) International application number: PCT/CN2022/089884
(87) International publication number: WO 2023/045330

(57) **Abstract**

A natural biopreservative for a flour product, a preparation method therefor and an application thereof. The natural biopreservative for the flour product is prepared by mixing lactic acid bacteria, distiller's yeast, an edible culture medium, and water, and performing fermentation, wherein, in parts by weight, 0.5-5 parts of the lactic acid bacteria, 0.5-5 parts of the distiller's yeast, 90-130 parts of the edible culture medium, and 90-130 parts of water. The natural biopreservative for a flour product of the present invention is prepared by fermentation using common lactic acid bacteria, distiller's yeast and edible culture medium, the raw materials are readily available and the preparation process is simple. When the biopreservative is applied to the production of the flour product, secondary or even multiple times of fermentation is not needed, the use method is simple, and the shelf life of the flour product is extended. Therefore, the shelf life of the product is extended, freshness within the shelf life is improved, and waste of the product is reduced.

## Description

### Technical Field

The present invention relates to the technical field of food processing, and more particularly, to a natural biopreservative for a flour product, a preparation method therefor and application thereof.

### Background Art

Since ancient times, food is a basic necessity for the people, and food safety is extremely important, regardless of time or location. With the development of society, the process of industrialization is gradually accelerated, but the storage and circulation seriously limit the development of the food industry, food spoilage results in a lot of waste, and can sometimes cause food poisoning.

At present, the main preservatives in the baking industry are chemical preservatives, mainly including sorbic acid and salts thereof, propionic acid and salts thereof, dehydroacetic acid and sodium salts thereof, sodium diacetate, etc. Therefore, the development of safer, broad-spectrum, and good antimicrobial preservatives is the future development trend. For instance, as a staple food, the steamed bun can only use lysine hydrochloride as a preservative, but the price of lysine hydrochloride is high and the it significantly affects the taste, so the development of suitable biopreservative products is an urgent need of the industry.

Chinese patent CN104206988A discloses a method for processing and preserving lactic acid bacteria steamed bun at normal temperature, wherein a bacteria suspension of lactobacillus bulgaricus and Streptococcus thermophilus is used, and then the bacterial suspension is added into flour and water for fermentation to obtain a milky white and fluid mature sour dough batter, and the dough is prepared by using the sour dough batter, water, yeast, and flour for secondary fermentation to prepare the lactic acid bacteria steamed bun, wherein the bacterial suspension is cultured in an MRS broth culture medium. Because MRS is a non-food-grade culture medium, the isolated bacteria need to be washed repeatedly with normal saline, the process is complex and the production efficiency is low.

Chinese patent CN110157646 discloses a strain of lactic acid bacteria inhibiting the growth of fungi and application thereof in the preparation of steamed bun. In this invention, one strain of lactic acid bacteria with strong fungistatic properties is selected from 1,255 strains of lactic acid bacteria derived from plants, then the strain is prepared into a bacterial suspension, and flour and water are added for fermentation to obtain a sour batter, and finally the sour batter, water, yeast and flour are added to prepare a dough, and after a second fermentation, a lactic acid bacteria steamed bun is prepared, effectively extending the shelf life of the steamed bun. This strain is a specific strain and the culture process is complicated.

### Summary of the Invention

The technical problem to be solved by the present invention is: to provide a natural biopreservative for a flour product to extend the shelf life of the flour products.

In view of the deficiencies of the prior art, the first object of the present invention is to provide a natural biopreservative for a flour product; the second object of the present invention is to provide a preparation method for the above-mentioned natural biopreservative for a flour product; the third object of the present invention is to provide the application of the above-mentioned natural biopreservative for a flour product or the above-mentioned natural biopreservative for a flour product prepared by the above-mentioned preparation method in a flour product; the fourth object of the present invention is to provide a long shelf-life steamed bun comprising the above-mentioned natural biopreservative for a flour product or the above-mentioned natural biopreservative for a flour product prepared by the above-mentioned preparation method; the fifth object of the present invention is to provide a preparation method for the above-mentioned long-shelf steamed bun.

### Technical solution of the present invention:

The natural biopreservative for a flour product is prepared by mixing lactic acid bacteria, distiller's yeast (wine yeast), an edible culture medium, and water, and performing fermentation, wherein, in parts by weight, 0.5-5 parts of the lactic acid bacteria, 0.5-5 parts of the distiller's yeast, 90-130 parts of the edible culture medium, and 90-130 parts of water.

Preferably, in parts by weight, 2-3 parts of lactic acid bacteria, 0.5-5 parts of distiller's yeast, 90-130 parts of edible culture medium, and 90-130 parts of water.

Preferably, the lactic acid bacteria are one or two or more of lactobacillus, streptococcus, leuconostoc, bifidobacterium, and pediococcus, preferably comprising leuconostoc and/or pediococcus.

Preferably, the lactic acid bacteria are in parts by weight, 0-1 parts of lactobacillus, 0-1 parts of streptococcus, 1-2 parts of leuconostoc, 0-1 parts of bifidobacterium and 1-2.5 parts of pediococcus.

Preferably, the lactic acid bacteria are a combination of leuconostoc and pediococcus, or a combination of lactobacillus, streptococcus, and bifidobacterium.

Preferably, in the case where the lactic acid bacteria are a combination of leuconostoc and pediococcus, the total mass of the lactic acid bacteria is 2-3 parts by weight; in the case where the lactic acid bacteria are a combination of lactobacillus, streptococcus and bifidobacterium, the total mass of lactic acid bacteria is 1.5-5 parts by weight.

Preferably, the edible culture medium is one or two or more of wheat flour, whey powder, glucose, and corn steep liquor.

Preferably, the distiller's yeast is a sweet wine yeast.

The present invention also provides a preparation method for the above-mentioned natural biopreservative for a flour product, comprising mixing lactic acid bacteria, distiller's yeast, food-grade culture medium, and water, and performing fermentation to a pH of 3.0-4.0.

Preferably, the fermentation temperature is 30-40°C, preferably 35-40°C.

The present invention also provides the application of the above-mentioned natural biopreservative for a flour product or a natural biopreservative for a flour product prepared by the above-mentioned preparation method in a flour product.

The present invention also provides a long shelf-life steamed bun, comprising the following ingredients in parts by weight: 100 parts of wheat flour, 10-50 parts of water, 0.5-5 parts of yeast, and 5-70 parts of the above-mentioned natural biopreservative or the natural biopreservative prepared by above-mentioned preparation method.

The present invention also provides a preparation method for the above-mentioned long shelf-life steamed bun, comprising the following steps:
(1) dough preparing: mixing wheat flour, yeast, the above-mentioned natural biopreservative or the natural biopreservative prepared by the above-mentioned preparation method with water, and preparing a dough by mixing and pressing the dough;
(2) steamed bun embryo forming: dividing the dough of step (1) and forming to obtain a steamed bun embryo;
(3) leavening: leavening the steamed bun embryo of step (2);
(4) steaming: steaming the steamed bun embryo leavening in step (3).

Preferably, the dough mixing speed in step (1) is 100-200 r/min, preferably, the dough mixing time is 5-10 min, and further preferably, the number of times of pressing dough is 5-15 times.

Preferably, the leavening temperature in step (3) is 30-40°C, and preferably, the leavening time is 50-70 min.

Preferably, the steaming temperature in step (4) is 90-110°C, preferably, the steaming time is 900-1500 s.

Advantageous effects of the present invention:
(1) The natural biopreservative for a flour product of the present invention is prepared by fermentation using common lactic acid bacteria, distiller's yeast, and edible culture medium, the raw materials are readily available and the preparation process is simple;
(2) adding the natural biopreservative of the present invention in the process of preparing a flour product, secondary or even multiple times of fermentation is not needed, the use method is simple, and the shelf life of the flour product is extended. Therefore, the shelf life of the prepared product is extended, freshness within the shelf life is improved, and waste of the product is reduced.

### Detailed Description of the Invention

It should be noted that the embodiments and features of the embodiments in the present application can be combined with each other without conflict. Hereinafter, the present invention will be described in detail with reference to examples.

The natural biopreservative for a flour product is prepared by mixing lactic acid bacteria, distiller's yeast, an edible culture medium, and water, and performing fermentation, wherein, in parts by weight, 0.5-5 parts of the lactic acid bacteria, 0.5-5 parts of the distiller's yeast, 90-130 parts of the edible culture medium, and 90-130 parts of water.

In a preferred embodiment of the present invention, the above-mentioned natural biopreservatives comprise, in parts by weight, 2-3 parts of lactic acid bacteria, 0.5-5 parts of distiller's yeast, 90-130 parts of edible culture medium and 90-130 parts of water.

In yet another preferred embodiment of the present invention, the lactic acid bacteria are one or two or more of lactobacillus, streptococcus, leuconostoc, bifidobacterium, and pediococcus, preferably comprising leuconostoc and/or pediococcus.

In yet another preferred embodiment of the present invention, the lactic acid bacteria are in parts by weight, 0-1 parts of lactobacillus, 0-1 parts of streptococcus, 1-2 parts of leuconostoc, 0-1 parts of bifidobacterium and 1-2.5 parts of pediococcus.

In yet another preferred embodiment of the present invention, the lactic acid bacteria are a combination of leuconostoc and pediococcus, or a combination of lactobacillus, streptococcus, and bifidobacterium.

In yet another preferred embodiment of the present invention, in the case where the lactic acid bacteria are a combination of leuconostoc and pediococcus, the total mass of the lactic acid bacteria is 2-3 parts by weight; in the case where the lactic acid bacteria are a combination of lactobacillus, streptococcus, and bifidobacterium, the total mass of lactic acid bacteria is 1.5-5 parts by weight.

In yet another preferred embodiment of the present invention, the edible culture medium is one or two or more of wheat flour, whey powder, glucose, and corn steep liquor.

In yet another preferred embodiment of the present invention, the distiller's yeast is a sweet wine yeast.

The present invention also provides a preparation method for the above-mentioned natural biopreservative for a flour product, comprising mixing lactic acid bacteria, distiller's yeast, food-grade culture medium, and water, and performing fermentation to a pH of 3.0-4.0. When fermentation to pH 3.0-4.0, a large amount of organic acids and ethanol accumulation, can better effectively extend the shelf life of a steamed bun.

In yet another preferred embodiment of the present invention, the fermentation temperature is 30-40°C, preferably 35-40°C.

The present invention also provides the application of the above-mentioned natural biopreservative for a flour product or a natural biopreservative for a flour product prepared by the above-mentioned preparation method in a flour product.

The present invention also provides a long shelf-life steamed bun comprising the following ingredients in parts by weight: 100 parts of wheat flour, 10-50 parts of water, 0.5-5 parts of yeast, and 5-70 parts of the above-mentioned natural biopreservative or the natural biopreservative prepared by above-mentioned preparation method.

The present invention also provides a preparation method for the above-mentioned long shelf-life steamed bun comprising the following steps:
(1) dough preparing: mixing wheat flour, yeast, the above-mentioned natural biopreservative or the natural biopreservative prepared by the above-mentioned preparation method with water, and preparing a dough by mixing and pressing the dough;
(2) steamed bun embryo forming: dividing the dough of step (1) and forming to obtain a steamed bun embryo;
(3) leavening: leavening the steamed bun embryo of step (2);
(4) steaming: steaming the steamed bun embryo leavening in step (3).

In yet another preferred embodiment of the present invention, the dough mixing speed in step (1) is 100-200 r/min, preferably, the dough mixing time is 5-10 min, and further preferably, the number of times of pressing dough is 5-15 times.

In yet another preferred embodiment of the present invention, the leavening temperature in step (3) is 30-40°C, and preferably, the leavening time is 50-70 min.

In yet another preferred embodiment of the present invention, the steaming temperature in step (4) is 90-110°C, preferably, the steaming time is 900-1500 s.

The benefits of the present invention are further illustrated by the following specific examples.

Raw materials and equipment sources used in examples and comparative examples are shown in Table 1.

**Table 1 Raw materials and equipment sources used in examples and comparative examples**

| Raw materials or equipment used | Model\ Purity | Vendors |
|---|---|---|
| Lactobacillus | 10,000,000,000 CFU/g | Shaanxi Zhonghejian Peptide Bioengineering Co., Ltd. |
| Streptococcus | ACCC11093 | Shanghai Huzheng Biotechnology Co., Ltd. |
| Leuconostoc | ATCC 10830a | American Type Culture Collection (ATCC) |
| Bifidobacterium | ≥ 10,000,000,000 CFU/g | Shaanxi Zhonghejian Peptide Bioengineering Co., Ltd. |
| Pediococcus | 10,000,000,000 CFU/g | Qingdao Norson Biotechnology Co., Ltd. |
| Angel sweet wine yeast | Sweet wine yeast 8 g | Angel Yeast Co., Ltd. |
| Angel flavor sweet wine yeast | Wine yeast 8 g | Angel Yeast Co., Ltd. |
| Medium gluten wheat flour | Three-start flour | Wudeli Flour Group Co., Ltd. |
| Edible glucose (monohydrate) | Food grade | Jiangsu Fuzhan Pharmaceutical Co., Ltd. |
| Whey powder | Food grade 80% | Zhengzhou Tabo Trading Co., Ltd. (imported from America) |
| Corn steep liquor | 50% | Shanghai Fangqi Instrument Co., Ltd. |
| Yeast | Angel low-sugar high-activity dry yeast | Angel Yeast Co., Ltd. |
| Leavening box | Refrigerated leavening box | Qingdao Shibei Electronics Co., Ltd. |

### Example 1

(1) 1 g of leuconostoc crispus, 1 g of Angel sweet wine yeast, 100 g of medium gluten wheat flour, and 10 g of glucose were weighed and added into 100 g of distilled water, the mixture was stirred until no obvious particle, sealed with preservative film, placed into a leavening box for fermentation, fermentation temperature is 35°C, fermentation until pH is 3.5 to prepare a natural biopreservative for a flour product.
(2) 1.3 g of yeast was weighed and added into 25 g of water for mixing well and pouring into a mixing cylinder, 100 g of medium gluten wheat flour and 30 g of the natural biopreservative for a flour product prepared in step (1) were added, then taken after mixing dough at a dough mixing speed of 150 r/min for 5 min, and pressing dough for 10 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 35°C, and the humidity was 60%; finally, the fermented steamed bun embryo is put into a steaming cabinet for steaming. The long shelf-life steamed bun was obtained by steaming it at a steaming temperature of 100°C for 900 s.

The above-mentioned long-shelf steamed bun was cooled to room temperature, packaged with polyethylene material, and placed in a constant temperature oven at 35 ± 5°C for storage, the time when mildew occurs was observed, the shelf-life effect of the steamed bun was evaluated according to the evaluation criteria in Table 2, and the test results were shown in Table 3.

**Table 2 Scoring criteria for mildew of steamed bun**

| Mildew time of steamed bun | 12-24 h | 24-36 h | 36-48 h | >48 h |
|---|---|---|---|---|
| Score | 1 | 4 | 7 | 10 |

### Example 2

(1) 1 g of leuconostoc crispus, 1 g of pediococcus, 2 g of Angel flavor sweet wine yeast, 90 g of medium gluten wheat flour, and 40 g of whey powder were weighed and added into 130 g of distilled water, the mixture was stirred until no obvious particle, sealed with preservative film, placed into a leavening box for fermentation, fermentation temperature is 40°C, fermentation until pH is 4.0 to prepare a natural biopreservative for a flour product.
(2) 3 g of yeast was weighed and added into 10 g of water for mixing well and pouring into a mixing cylinder, 100 g of medium gluten wheat flour and 70 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 50min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

### Example 3

(1) 0.5 g of lactobacillus, 1 g of Angel sweet wine yeast, 0.5 g of Angel flavor sweet wine yeast, 50 g of medium gluten wheat flour, and 40 g of corn steep liquor were weighed and added into 90 g of distilled water, the mixture was stirred until no obvious particle, sealed with preservative film, placed into a leavening box for fermentation, fermentation temperature is 30°C, fermentation until pH is 3.0 to prepare a natural biopreservative for a flour product.
(2) 0.5 g of yeast was weighed and added into 20 g of water for mixing well and pouring into a mixing cylinder, 100 g of medium gluten wheat flour and 60 g of the natural biopreservative for a flour product prepared in step (1) were added, then taken after mixing dough at a dough mixing speed of 200 r/min for 7 min, and pressing dough for 5 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 70min, the fermentation temperature was 40°C, and the humidity was 60%; finally, the fermented steamed bun embryo is put into a steaming cabinet for steaming. The long shelf-life steamed bun was obtained by steaming it at a steaming temperature of 110°C for 1200 s.

The steamed bun was tested for shelf-life as in Example 1 and the results are shown in Table 3.

### Example 4

(1) 1 g of lactobacillus, 1 g of streptococcus, 1 g of leuconostoc, 1 g of bifidobacterium, 1 g of pediococcus, 3 g of Angel flavor sweet wine yeast, 50 g of whey powder and 50 g of glucose were weighed and added into 110 g of distilled water, the mixture was stirred until no obvious particle, sealed with preservative film, placed into a leavening box for fermentation, fermentation temperature is 30°C, fermentation until pH is 3 to prepare a natural biopreservative for a flour product.
(2) 2 g of yeast was weighed and added into 40 g of water for mixing well and pouring into a mixing cylinder, 100 g of medium gluten wheat flour and 5 g of the natural biopreservative for a flour product prepared in step (1) were added, then taken after mixing dough at a dough mixing speed of 150 r/min for 5 min, and pressing dough for 10 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 35°C, and the humidity was 60%; finally, the fermented steamed bun embryo is put into a steaming cabinet for steaming. The long shelf-life steamed bun was obtained by steaming it at a steaming temperature of 100°C for 900 s.

The steamed bun was tested for shelf-life as in Example 1 and the results are shown in Table 3.

### Example 5

(1) 2 g of leuconostoc crispus, 1 g of pediococcus, 2 g of sweet wine yeast, 3 g of Angel flavor sweet wine yeast, and 90 g of medium gluten wheat flour were weighed and added into 130 g of distilled water, the mixture was stirred until no obvious particle, sealed with preservative film, placed into a leavening box for fermentation, fermentation temperature is 35°C, fermentation until pH is 3.5 to prepare a natural biopreservative for a flour product.
(2) 5 g of yeast was weighed and added into 50 g of water for mixing well and pouring into a mixing cylinder, 100 g of medium gluten wheat flour and 20 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

### Example 6

(1) 0.5 g of lactobacillus, 0.5 g of streptococcus, 0.5 g of bifidobacterium, 2 g of Angel flavor sweet wine yeast, 40 g of medium gluten wheat flour, 20 g of glucose, and 60 g of corn steep liquor were weighed and added into 120 g of distilled water, the mixture was stirred until no obvious particle, sealed with preservative film, placed into a leavening box for fermentation, fermentation temperature is 30°C, fermentation until pH is 3.5 to prepare a natural biopreservative for a flour product.
(2) 2.5 g of yeast was weighed and added into 30 g of water for mixing well and pouring into a mixing cylinder, 100 g of medium gluten wheat flour and 10 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

### Example 7

(1) 2.5 g of pediococcus, 0.5 g of Angel flavor sweet wine yeast, 40 g of whey powder, and 70 g of corn steep liquor were weighed and added into 110 g of distilled water, the mixture was stirred until no obvious particle, sealed with preservative film, placed into a leavening box for fermentation, fermentation temperature is 35°C, fermentation until pH is 3.0 to prepare a natural biopreservative for a flour product.
(2) 4 g of yeast was weighed and added into 35 g of water for mixing well and pouring into a mixing cylinder, 100 g of medium gluten wheat flour and 35 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

### Comparative Example 1

(1) 2.5 g of pediococcus, 40 g of whey powder, and 70 g of corn steep liquor were weighed, and added into 110 g of distilled water, the mixture was stirred until no obvious particle, sealed with preservative film, placed into a leavening box for fermentation, fermentation temperature is 35°C, fermentation until pH is 3.0 to prepare a natural biopreservative for a flour product.
(2) 4 g of yeast was weighed and added into 35 g of water for mixing well and pouring into a mixing cylinder, 100 g of medium gluten wheat flour and 35 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 60 min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

### Comparative Example 2

(1) 1 g of leuconostoc crispus, 1 g of pediococcus, 2 g of Angel flavor sweet wine yeast, 90 g of medium gluten wheat flour, and 40 g of whey powder were weighed and added into 130 g of distilled water, the mixture was stirred until no obvious particle, sealed with preservative film, placed into a leavening box for fermentation, fermentation temperature is 40°C, fermentation until pH is 4.5 to prepare a natural biopreservative for a flour product.
(2) 3 g of yeast was weighed and added into 10 g of water for mixing well and pouring into a mixing cylinder, 100 g of medium gluten wheat flour and 70 g of the natural biopreservative for a flour product prepared in step (1) were added, then taken after mixing dough at a dough mixing speed of 100 r/min for 10 min, and pressing dough for 15 times; the dough after pressing was rolled into a uniform strip shape, and cut with a knife to obtain a steamed bun embryo with each having a weight of 50 g, and placed into a steamer rack; the steamer rack with the steamed bun embryo was placed into a leavening box to ferment for 50min, the fermentation temperature was 30°C, and the humidity was 60%; finally, the fermented steamed bun embryo is put into a steaming cabinet for steaming. The long shelf-life steamed bun was obtained by steaming it at a steaming temperature of 90°C for 1500 s.

The steamed bun was tested for shelf-life as in Example 1 and the results are shown in Table 3.

**Table 3 Test results**

| | Examp le 1 | Examp le 2 | Examp le 3 | Examp le 4 | Examp le 5 | Examp le 6 | Examp le 7 | Comparat ive Example 1 | Comparat ive Example 2 |
|---|---|---|---|---|---|---|---|---|---|
| She If life scor e | 7 | 10 | 7 | 10 | 10 | 7 | 10 | 4 | 4 |

As can be seen from Table 3, in the application of the natural biopreservative for a flour product prepared in Examples 1 to 7 in a steamed bun, the shelf life can be maintained at 46-48 h, wherein in Examples 2, 4, 5 and 7, the lactic acid bacteria contain leuconostoc and/or pediococcus, and the shelf life of the steamed bun prepared therefrom can reach more than 48 h. Compared with Example 2, distiller's yeast was not added in natural biopreservative for a flour product in Comparative Example 1, the mildew time was 24-36 h, and the shelf life was significantly shortened; in comparison with Example 7, Comparative Example 2 was fermented to pH=4.5 when preparing the biopreservative for flour product. The pH of the fermentation was high, and the accumulation of organic acids and ethanol was small, resulting in shortened mildew time and shortened shelf life.

In summary, the natural biopreservative for a flour product of the present invention is prepared by fermentation using common lactic acid bacteria, distiller's yeast, and edible culture medium, the raw materials are readily available and the preparation process is simple; When the biopreservative is applied to the production of the flour product, secondary or even multiple times of fermentation is not needed, the use method is simple, and the shelf life of the flour product is extended. Therefore, the shelf life of the product is extended, freshness within the shelf life is improved, and waste of the product is reduced.

The foregoing is merely a preferred embodiment of the present invention and is not intended to limit the present invention in any way, other and further embodiments of the present invention may be devised without departing from the basic scope thereof, and the scope thereof is determined by the claims that follow.

## Claims

1. A natural biopreservative for a flour product, **characterized in that** the natural biopreservative for the flour product is prepared by mixing lactic acid bacteria, distiller's yeast, an edible culture medium, and water to form a fermentation mix, and allowing the fermentation mix to undergo fermentation to produce the natural biopreservative, wherein the fermentation mix comprises in parts by weight, 0.5-5 parts of the lactic acid bacteria, 0.5-5 parts of the distiller's yeast, 90-130 parts of the edible culture medium, and 90-130 parts of the water.

2. The natural biopreservative according to claim 1, wherein the fermentation mix comprises, in parts by weight, 2-3 parts of the lactic acid bacteria, 0.5-5 parts of the distiller's yeast, 90-130 parts of the edible culture medium and 90-130 parts of the water.

3. The natural biopreservative according to claim 1 or 2, **characterized in that** the lactic acid bacteria are one or two or more member selected from the group consisting of lactobacillus, streptococcus, leuconostoc, bifidobacterium, and pediococcus, preferably comprising leuconostoc and/or pediococcus.

4. The natural biopreservative according to claim 3, **characterized in that** the lactic acid bacteria are in parts by weight, 0-1 parts of lactobacillus, 0-1 parts of streptococcus, 1-2 parts of leuconostoc, 0-1 parts of bifidobacterium and 1-2.5 parts of pediococcus.

5. The natural biopreservative according to claim 1 or 2, **characterized in that** the lactic acid bacteria are a combination of leuconostoc and pediococcus, or a combination of lactobacillus, streptococcus, and bifidobacterium.

6. The natural biopreservative according to claim 5, **characterized in that** in the case where the lactic acid bacteria are the combination of leuconostoc and pediococcus, the total mass of the lactic acid bacteria is 2-3 parts by weight; in the case where the lactic acid bacteria are the combination of lactobacillus, streptococcus, and bifidobacterium, the total mass of the lactic acid bacteria is 1.5-5 parts by weight.

7. The natural biopreservative according to any one of claims 1 to 6, **characterized in that** the edible culture medium is one or two or more group consisting of wheat flour, whey powder, glucose, and corn steep liquor.

8. The natural biopreservative according to claim 1, **characterized in that** the distiller's yeast is a sweet wine yeast.

9. A preparation method for the natural biopreservative according to any one of claims 1 to 8, **characterized in that**, comprising: obtaining by mixing lactic acid bacteria, distiller's yeast, a food-grade culture medium, and water, and performing fermentation to a pH of 3.0-4.0.

10. The preparation method according to claim 9, **characterized in that** the fermentation temperature is 30-40°C, preferably 35-40°C.

11. Application of the natural biopreservative according to any one of claims 1 to 8 or the natural biopreservative prepared by the preparation method according to claim 9 or 10 in a flour product.

12. A long shelf-life steamed bun, **characterized in that**, comprising following raw materials in parts by weight: 100 parts of wheat flour, 10-50 parts of water, 0.5-5 parts of yeast, and 5-70 parts of the natural biopreservative according to any one of claims 1 to 8 or the natural biopreservative prepared by the preparation method according to claim 9 or 10.

13. A preparation method for the long shelf-life steamed bun according to claim 12, **characterized in that**, comprising the following steps:
(1) dough preparing: mixing wheat flour, yeast, the natural biopreservative according to any one of claims 1 to 8 or the natural biopreservative prepared by the preparation method according to claim 9 or 10 with water, and preparing dough by mixing and pressing the dough;
(2) steamed bun embryo forming: dividing the dough of step (1) and forming to obtain a steamed bun embryo;
(3) leavening: leavening the steamed bun embryo of step (2);
(4) steaming: steaming the steamed bun embryo leavening in step (3).

14. The preparation method according to claim 13, **characterized in that** the dough mixing speed in step (1) is 100-200 r/min, preferably, the dough mixing time is 5-10 min, and further preferably, the number of times of pressing dough is 5-15 times.

15. The preparation method according to claim 13 or 14, **characterized in that** the leavening temperature in step (3) is 30-40°C, and preferably, the leavening time is 50-70 min.

16. The preparation method according to any one of claims 13 to 15, **characterized in that** the steaming temperature in step (4) is 90-110°C, preferably, the steaming time is 900-1500 s.
